(19) Europäisches Patentamt

European Patent Office

Office européen des brevets

(11) **EP 1 439 103 B1**

(12) **EUROPÄISCHE PATENTSCHRIFT**

(45) Veröffentlichungstag und Bekanntmachung des Hinweises auf die Patenterteilung:
**18.01.2006 Patentblatt 2006/03**

(51) Int Cl.:
**B60T 8/00** *(2006.01)*

(21) Anmeldenummer: **04000110.9**

(22) Anmeldetag: **07.01.2004**

(54) **Verfahren zur Fahrdynamikregelung für einen Fahrzeugzug**

Vehicle dynamics control method for a tractor-trailer combination

Procédé de réglage de la dynamique de conduite pour un train routier

(84) Benannte Vertragsstaaten:
**DE IT NL SE**

(30) Priorität: **14.01.2003 DE 10301096**

(43) Veröffentlichungstag der Anmeldung:
**21.07.2004 Patentblatt 2004/30**

(73) Patentinhaber: **WABCO GmbH & CO. OHG**
**30453 Hannover (DE)**

(72) Erfinder: **Heuer, Bernd**
**31171 Nordstemmen (DE)**

(74) Vertreter: **Günther, Constantin**
**WABCO GmbH & Co. OHG,**
**Postfach 91 12 62**
**30432 Hannover (DE)**

(56) Entgegenhaltungen:
**EP-A- 1 167 141**    **US-A- 5 333 940**
**US-B1- 6 327 903**

EP 1 439 103 B1

**Beschreibung**

Die Erfindung betrifft ein Verfahren zur Fahrdynamikregelung für einen Fahrzeugzug gemäß dem Oberbegriff des Patentanspruchs 1.

Verfahren zur Fahrdynamikregelung dienen dazu, unsichere Fahrzustände, wie z. B. Übersteuern, Untersteuern oder Schleudern, durch gezielte automatische Betätigungen einer Motorsteuerung und/oder einzelner Radbremsen des Fahrzeuges zu vermeiden oder zumindest deren Auswirkungen zu verringern. Im Bereich von Nutzfahrzeugen ist es bekannt, bei einem Fahrzeugzug, der aus Zugfahrzeug und Anhängefahrzeug besteht, ein Fahrdynamik-Regelungssystem in dem Zugfahrzeug vorzusehen. Bei der Durchführung eines Verfahrens zur Fahrdynamikregelung bewirkt dieses Fahrdynamik-Regelungssystem insofern auch eine Einbeziehung des Anhängefahrzeugs in Regelungsvorgang, als daß in bestimmten Fahrsituationen eine Bremsdruckvorgabe an das Anhängefahrzeug, z. B. über ein Anhängersteuerventil oder eine Datenschnittstelle, ausgegeben wird. Hierdurch wird in den bestimmten Fahrsituationen eine Bremswirkung an dem Anhängefahrzeug erzeugt, durch die das Fahrverhalten des gesamten Fahrzeugzuges stabilisiert werden kann, z. B. um ein Einknicken des Fahrzeugzuges oder starkes Schleudern zu vermeiden.

Auf Fahrbahnen mit relativ geringem Reibwert kann die Bremsdruckvorgabe unter Umständen bereits zu einer unerwünschten Verringerung der Seitenführungskräfte an den Rädern des Anhängefahrzeuges noch vor einem eventuellen Ansprechen eines Antiblockiersystems in dem Anhängefahrzeug führen. Die Aufrechterhaltung ausreichender Seitenführungskräfte ist jedoch für eine wirkungsvolle Stabilisierung des Fahrverhaltens des Fahrzeugzuges bedeutsam.

Aus der Patentanmeldung EP 1 167 141 Al ist ein Verfahren und ein System zur Verhinderung von Fahrzeug-Instabilitäten für einen Fahrzeugverbund aus einem Zugfahrzeug und einem Deichselanhänger bekannt, bei dem die Bremsen z. B. an der Hinterachse des Deichselanhängers von einem in der Zugmaschine angeordneten Stabilitätssystem aktivierbar sind. Gemäß bestimmter Ausführungsformen können dabei Signale einer zusätzlichen Sensorik im Anhänger berücksichtigt werden.

Der Erfindung liegt daher die Aufgabe zugrunde, ein Verfahren zur Fahrdynamikregelung für einen Fahrzeugzug anzugeben, welches eine Ansteuerung der Bremsanlage des Anhängefahrzeugs erlaubt und dabei eine unerwünscht große Verringerung der Seitenführungskräfte an den Rädern des Anhängefahrzeugs vermeidet.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Nachfolgend wird als Sammelbegriff für die verschiedenen Arten, von dem Zugfahrzeug aus die Bremsanlage des Anhängefahrzeugs zu betätigen, der Begriff des Bremsanforderungswerts verwendet. Hierunter werden alle Arten der Informationsübertragung vom Zugfahrzeug zum Anhängefahrzeug verstanden, die zu einer Betätigung der Bremsanlage des Anhängefahrzeugs führen. Als Beispiele seien eine Bremsdruckvorgabe über ein Anhängersteuerventil oder die Übertragung eines Bremsbetätigungswerts über eine elektronische Datenschnittstelle genannt.

Die Erfindung hat den Vorteil, mit relativ geringem Aufwand das Fahrverhalten des Fahrzeugzuges sicherer zu gestalten und instabilen Fahrsituationen noch besser entgegenzuwirken. Da bei den bekannten Verfahren keine Einbeziehung von Daten des Anhängefahrzeugs in die Regelungsstrategie vorgesehen war, war es nicht möglich, die Reaktion des Anhängefahrzeugs auf die Bremsdruckvorgabe zu berücksichtigen. Dies wird nun mit der Erfindung auf einfach zu realisierende Weise ermöglicht. Insgesamt wird also die Fahrsicherheit verbessert.

In einer vorteilhaften Weiterbildung der Erfindung können Daten des Anhängefahrzeugs gemäß der Norm ISO 11992 verwendet werden. Hierdurch ist auf einfache Weise eine Kompatibilität zwischen Zugfahrzeugen und Anhängefahrzeugen unterschiedlicher Herstellung gewährleistet.

Die Erfindung wird nachfolgend unter Nennung weiterer Vorteile anhand eines Ausführungsbeispiels unter Verwendung von Zeichnungen näher erläutert.

Es zeigen

Fig. 1    eine Draufsicht auf einen Fahrzeugzug und

Fig. 2    eine vorteilhafte Ausgestaltung des erfindungsgemäßen Verfahrens in Zeitdiagrammdarstellung.

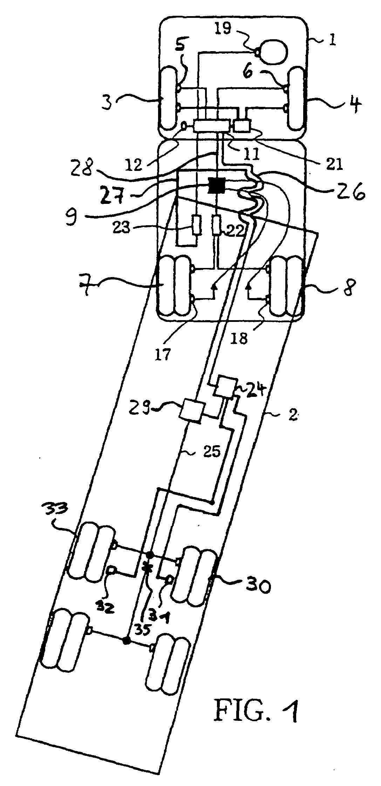

In der Fig. 1 ist ein Fahrzeugzug mit einem Zugfahrzeug (1) dargestellt, an das ein Anhängefahrzeug (2) angekoppelt ist. Das Zugfahrzeug weist eine lenkbare Vorderachse, welcher Räder (3, 4) zugeordnet sind, sowie eine Hinterachse, welcher Räder (7, 8) zugeordnet sind, auf. Die Räder (3, 4, 7, 8) sind über den Rädern zugeordnete Radbremsen mit Bremskraft beaufschlagbar. Nachfolgend sei angenommen, das Zugfahrzeug (1) sei mit einer Druckmittelbremsanlage mit elektrischer Steuerung versehen, wie z. B. einem elektrisch gesteuertem Bremssystem (EBS). Die Erfindung ist jedoch auch vorteilhaft bei Bremsanlagen anderen Typs einsetzbar, z. B. bei rein elektromechanisch betätigbaren Bremsen. Des weiteren sei in dem Zugfahrzeug (1) ein Fahrdynamik-Regelungssystem vorgesehen.

In dem Zugfahrzeug (1) ist eine Steuereinrichtung (11) vorgesehen, die zur Steuerung verschiedener Bremsfunktionen an der Vorderachse des Zugfahrzeugs (1) dient. Die Steuereinrichtung (11) kann z. B. als elektronisches EBS-Steuergerät ausgebildet sein. Hierfür ist die Steuereinrichtung (11) über eine elektrische Leitung mit einer Ventileinrichtung (21) verbunden, mittels der der Bremsdruck in den Radbremsen der Räder (3, 4) steuerbar ist. Zur Steuerung der Radbremsen der Hinterachse zugeordneten Rädern (7, 8) ist ein Steuermodul (9) vorgesehen. Das Steuermodul (9) ist über eine elektrische Leitung mit einer weiteren Ventileinrichtung (22) verbunden, über die der Bremsdruck in den Radbremsen der Räder (7, 8) steuerbar ist. Das Steuermodul (9) ist über eine Datenleitung (28) mit der Steuereinrichtung (11) zum Datenaustausch verbunden.

Das Steuermodul (9) empfängt über elektrische Leitungen Drehzahlsignale von an den Rädern (7, 8) angeordneten Drehzahlsensoren (17, 18), mittels derer die Drehgeschwindigkeiten der Hinterräder (7, 8) bestimmbar sind. Die Steuereinrichtung (11) ist mit Drehzahlsensoren (5, 6), mittels derer die Drehgeschwindigkeiten der Vorderräder (3, 4) bestimmbar sind, über elektrische Leitungen verbunden. Die Steuereinrichtung (11) empfängt über die Datenleitung (28) von der weiteren Steuereinrichtung (9) Signale, die die Drehgeschwindigkeiten der Hinterräder (7, 8) des Zugfahrzeugs (1) repräsentieren.

In die Steuereinrichtung (11) ist des weiteren das Fahrdynamik-Regelungssystem integriert. Zur Ermittlung von für die Fahrdynamikregelung erforderlichen physikalischen Größen ist an die Steuereinrichtung (11) über elektrische Leitungen ein Lenkwinkelsensor (19) sowie ein Querbeschleunigungssensor (12) angeschlossen sein. Zusätzlich ist ein Gierratensensor zur Ermittlung der Giergeschwindigkeit vorgesehen. Der Gierratensensor kann z. B. in die Steuereinrichtung (11) integriert sein. Aus den Signalen dieser Sensoren, den Signalen der Drehzahlsensoren (5, 6, 17, 18) und gegebenenfalls weiterer Signale werden in der Steuereinrichtung (11) Fahrdynamiksignale ermittelt, welche dann ein instabiles Fahrverhalten und gegebenenfalls einen Bedarf für automatische Eingriffe in die Motorsteuerung oder die Bremsanlage zur Stabilisierung des Fahrverhaltens anzeigen. Die Steuereinrichtung (11) führt solche Eingriffe dann z. B. durch Betätigung der Radbremsen der Räder (3, 4, 7, 8) bzw. durch Ausgabe eines Bremsanforderungswerts an das Anhängefahrzeug (2) aus.

Das Anhängefahrzeug (2) weist ebenfalls eine druckmittelbetätigbare Bremsanlage auf, die über eine Bremsleitung (25) betätigbar ist. Als Einrichtung (23) zur Steuerung der Einbremsung des Anhängefahrzeugs (2) ist ein in dem Zugfahrzeug (1) angeordnetes Anhängersteuerventil (23) vorgesehen, mittels dessen die Bremsdruckleitung (25) über eine Bremsdruckleitung (27) mit Bremsdruck beaufschlagbar ist. Das Anhängersteuerventil (23) ist über eine elektrische Leitung an die Steuereinrichtung (11) angeschlossen. Mittels des Anhängersteuerventils (23) kann die Steuereinrichtung (11) den Bremsdruck in dem Anhängefahrzeug (2) steuern, z. B. indem der durch das Fahrdynamik-Regelungssystem in der Steuereinrichtung (11) ermittelte Bremsanforderungswert durch geeignete Betätigung des Anhängersteuerventils (23) in einen entsprechenden Druckwert umgewandelt wird.

Des weiteren ist in dem Anhängefahrzeug (2) eine Einrichtung (24) vorgesehen, welche eine Blockierschutzfunktion für das Anhängefahrzeug (2) ausübt, z. B. ein Antiblockiersystem. Das Antiblockiersystem (24) ist mittels einer Ventileinrichtung (29) in der Lage, den über die Bremsdruckleitung (25) dem Anhängefahrzeug zugeführten Bremsdruck zu modulieren, d.h. im Falle von Blockiergefahr zu reduzieren. Hierfür ist das Antiblockiersystem (24) über elektrische Leitungen mit an den Rädern (30, 33) angeordneten Drehzahlsensoren (31, 32) verbunden, mittels derer die Drehgeschwindigkeiten der Räder (30, 33) bestimmbar sind. Aus dem Verhalten der Drehgeschwindigkeiten kann das Antiblockiersystem (24) dann eine mögliche Blockiergefahr ableiten.

Das Antiblockiersystem (24) ist über ein elektrisches Verbindungskabel (26) mit der Steuereinrichtung (11) in dem Zugfahrzeug (1) verbunden. Das elektrische Verbindungskabel (26) enthält elektrische Versorgungsleitungen sowie eine Datenschnittstelle. Über die Datenschnittstelle gibt das Antiblockiersystem (24) eine Reihe von Datensignalen an die Steuereinrichtung (11) aus, z. B. den Mittelwert (M) der Drehgeschwindigkeiten der Räder (30, 33), deren Differenzwert (D) sowie eine Information über die Durchführung einer Antiblockier-Regelung. Diese und weitere übertragene Datensignale sind beispielsweise in der Norm ISO 11992 näher erläutert.

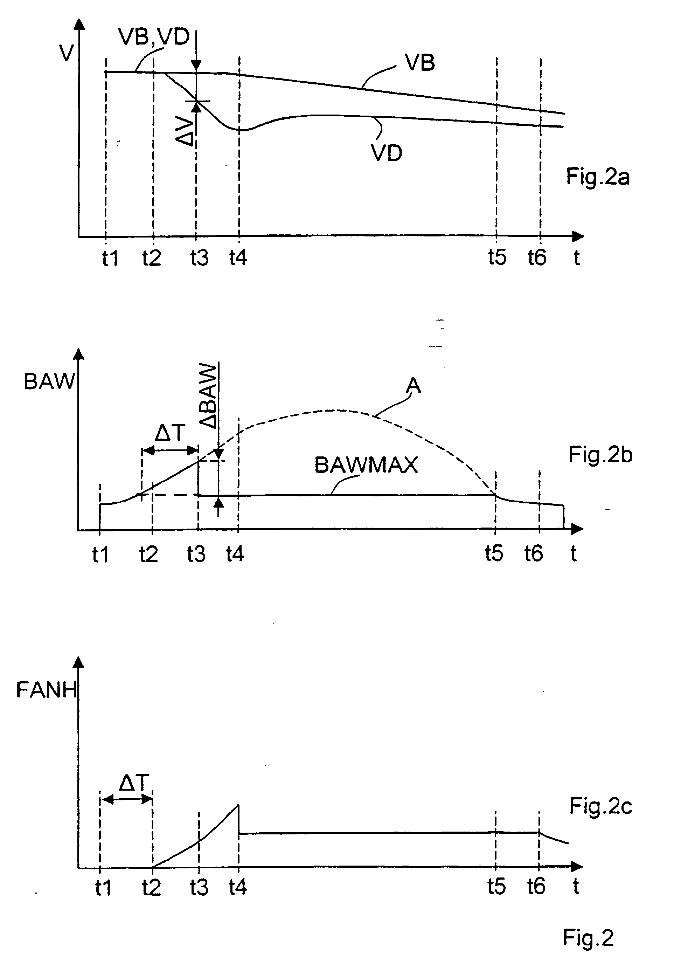

Die Steuereinrichtung (11) führt eine Reihe von Steueralgorithmen aus, beispielsweise Blockierschutzfunktion für die Vorderachse des Zugfahrzeugs (1), elektronische Bremskraftverteilung zwischen Vorder- und Hinterachse des Zugfahrzeugs (1), Bremsbelag-Verschleißoptimierung zwischen Vorder- und Hinterachse des Zugfahrzeugs (1) sowie durch das integrierte Fahrdynamik-Regelungssystem ein Verfahren zur Fahrdynamikregelung. Anhand der Fig. 2 wird nachfolgend ein Teil dieses Verfahrens zur Fahrdynamikregelung erläutert, welcher dazu dient, den Bremsanforderungswert unter Verwendung der von dem Anhängefahrzeug (2) empfangenen Datensignale zu ermitteln und an das Anhängefahrzeug (2) auszugeben.

In der Fig. 2 ist anhand dreier Zeitdiagramme der zeitliche Verlauf von Geschwindigkeitssignalen (Fig. 2a), des Bremsanforderungswerts (BAW) (Fig. 2b) und der Bremskraft (FANH)(Fig. 2c) des Anhängefahrzeugs (2) dargestellt. In der Fig. 2a ist der zeitliche Verlauf einer von dem Fahrdynamik-Regelungssystem berechneten Bewegungsgeschwindigkeit (VB) des Anhängefahrzeugs (2) sowie eine aus den von dem Anhängefahrzeug (2) empfangenen Datensignalen bestimmte resultierende Raddrehgeschwindigkeit (VD) angegeben.

In dem Anhängefahrzeug (2) werden die Raddrehgeschwindigkeiten von Rädern (30, 33) der linken und der rechten Fahrzeugseite mittels Drehgeschwindigkeitssensoren (31, 32) in dem Antiblockiersystem (24) erfaßt. Das Antiblockiersystem (24) bestimmt aus dem Signal des Sensors (32) ein Geschwindigkeitssignal ($v_2$), aus dem Signal des Sensors (31) ein Geschwindigkeitssignal ($v_1$). Des weiteren bestimmt das Antiblockiersystem (24) aus den Geschwindigkeitssignalen ($v_1$, $v_2$) ein mittleres Geschwindigkeitssignal (M) sowie ein Differenzgeschwindigkeitssignal (D), z. B. in folgender Weise:

$$M = \frac{v_1 + v_2}{2} \qquad [1]$$

$$D = v_1 - v_2 \qquad [2]$$

Die so ermittelten Größen (M, D) überträgt das Antiblockiersystem (24) über die Datenschnittstelle an das Zugfahrzeug (1). Des weiteren wird von dem Antiblockiersystem (24) eine Information an das Zugfahrzeug (1) dahingehend übertragen, ob in dem Anhängefahrzeug (2) eine Antiblockier-Regelung durchgeführt wird.

In dem Zugfahrzeug (1) wird die empfangene mittlere Geschwindigkeit (M) und die Differenzgeschwindigkeit (D) empfangen und weiteren Berechnungsschritten zugeführt. In einem ersten Berechnungsschritt werden die Raddrehgeschwindigkeiten der einzelnen Räder (30, 33) des Anhängefahrzeugs (2) aus diesen Größen (M, D) rekonstruiert, z. B. in folgender Weise:

$$VD_1 = M + \frac{D}{2} \qquad [3]$$

$$VD_2 = M - \frac{D}{2} \qquad [4]$$

Die Bewegungsgeschwindigkeiten ($VB_1$, $VB_2$) der linken und der rechten Fahrzeugseite des Anhängefahrzeuges (2) werden von dem Fahrdynamik-Regelungssystem vorzugsweise aus den Signalen des Lenkwinkelsensors (19), des Querbeschleunigungssensors (12), des Gierratensensors sowie der Raddrehgeschwindigkeitssignale der Sensoren (5, 6, 17, 18) des Zugfahrzeugs derart geschätzt, daß sie ein Maß für die Geschwindigkeit der mit Drehgeschwindigkeitssensoren (31, 32) versehenen Räder (30, 33) gegenüber der Fahrbahn darstellen. Hierdurch stellen die Bewegungsgeschwindigkeiten ($VB_1$, $VB_2$) und die zuvor ermittelten Raddrehgeschwindigkeiten ($VD_1$, $VD_2$) vergleichbare physikalische Größen dar, die z. B. für eine Differenzbildung zwecks Bestimmung eines Maßes des Bremsschlupfs des Anhängefahrzeugs (2) sinnvoll verwendbar sind.

Die Bewegungsgeschwindigkeiten ($VB_1$, $VB_2$) und die Raddrehgeschwindigkeiten ($VD_1$, $VD_2$) werden sodann zur seitenweisen Überwachung des Bremsschlupfs des Anhängefahrzeugs (2) verwendet. Der nachfolgend anhand der Fig. 2a dargestellte Vorgang wird für die linke und für die rechte Fahrzeugseite des Anhängefahrzeugs (2) jeweils separat durchgeführt. Dies ist Fig. 2a vereinfacht mit Platzhaltern (VB, VD) dargestellt, wobei für VB die Größen ($VB_1$, $VB_2$) und für VD die Größen ($VD_1$, $VD_2$) einsetzbar sind. Die Abweichung des Graphen der Raddrehgeschwindigkeit (VD) von dem Graphen der Bewegungsgeschwindigkeit (VB) in der Fig. 2a stellt daher das erwähnte Maß des Bremsschlupfs einer Fahrzeugseite des Anhängefahrzeugs (2) dar.

In einer vorteilhaften Ausgestaltung wird eine Blockiertendenz von Rädern (30, 33) des Anhängefahrzeugs (2) ermittelt, indem eine Bewegungsgeschwindigkeit (VB) des Anhängefahrzeuges (2) und eine aufgrund der von dem Anhängefahrzeug (2) empfangenen Datensignale bestimmte Raddrehgeschwindigkeit (VD) des Anhängefahrzeuges (2) auf Erreichen einer vorbestimmten Abweichung ($\Delta V$) voneinander überwacht werden. Wegen der seitenweisen Überwachung des Bremsschlupfs wird vorzugsweise dann eine Blockiertendenz erkannt, wenn zumindest bei einer der Fahrzeugseiten die Bewegungsgeschwindigkeit (VB) um die vorbestimmte Abweichung ($\Delta V$) von der Raddrehgeschwindigkeit (VD) abweicht. Es ist vorteilhaft, für die Ermittlung der Blockiertendenz die von dem Anhängefahrzeug (2) über die Datenschnittstelle ausgesandte Information über die Durchführung einer Antiblockier-Regelung des Antiblockiersystems (24) zusätzlich heranzuziehen.

Gemäß Fig. 2a sei angenommen, daß zu dem Zeitpunkt (t1) der Fahrzeugzug (1, 2) einen instabilen Fahrzustand aufweist, welcher das Fahrdynamik-Regelungssystem in dem Zugfahrzeug (1) dazu veranlaßt, eine Bremsung des Anhängefahrzeugs anzufordern. Hierzu gibt das Fahrdynamik-Regelungssystem über die Datenschnittstelle einen Bremsanforderungswert (BAW) mit vorbestimmtem Anfangswert an das Anhängefahrzeug (2) aus. Der Startwert ist beispielsweise so bemessen, daß auftretende Ansprechhysterese-Effekte in der Bremsanlage des Anhängefahrzeuges (2) kurzfristig überwunden werden. Sodann führt das Fahrdynamik-Regelungssystem in dem Zugfahrzeug (1) eine Fahrdynamikregelung nach vorgegebenen Strategien durch. Hierbei wird die Bremsanforderung an das Anhängefahrzeug (2), dargestellt durch den Bremsanforderungswert (BAW), gemäß der vorgegebenen Strategie angepaßt. Die Strategie kann z. B. eine Situationserkennung zur Erkennung einer Gefahrsituation und/oder der Art der Instabilität des Fahrzeugzuges enthalten, bei der etwa zwischen den Zuständen Übersteuern und Untersteuern unterschieden wird. Weitere Einflußgrößen für die Strategie können ein geschätzter Fahrbahnreibwert sowie die über Sensoren ermittelten Fahrdynamikgrößen, z. B. Gierwinkelgeschwindigkeit, Querbeschleunigung, Lenkwinkel sowie daraus abgeleitete Größen wie Gierwinkelbeschleunigung und Schwimmwinkel sein.

Zu dem Zeitpunkt (t2) spricht, wie in Fig. 2c dargestellt, die Bremsanlage des Anhängefahrzeugs (2) mit einer anlagenbedingten Verzögerungszeit ($\Delta$T) an. Zum Zeitpunkt (t2) steigt daher die Bremskraft (FANH) von dem Wert Null stetig an, d.h. die Bremskraft (FANH) folgt mit der anlagenbedingten Verzögerungszeit ($\Delta$T) dem Bremsanforderungswert (BAW). Die Aufbringung der Bremskraft (FANH) bewirkt, wie in Fig. 2a erkennbar, eine mit der Zeit zunehmende Differenz zwischen den zeitlichen Verläufen der Raddrehgeschwindigkeit (VD) und der Bewegungsgeschwindigkeit (VB) derselben Fahrzeugseite, d.h. es entsteht Bremsschlupf. Das Fahrdynamik-Regelungssystem beobachtet diesen Bremsschlupf, d. h. die Differenz zwischen der Raddrehgeschwindigkeit (VD) und der Bewegungsgeschwindigkeit (VB), und überwacht diesen Bremsschlupf auf Erreichen der vorbestimmten Abweichung ($\Delta$V). Bei Erreichen der vorbestimmten Abweichung ($\Delta$V) liegt eine Blockiertendenz von Rädern des Anhängefahrzeugs (2) vor. Die vorbestimmte Abweichung ($\Delta$V) kann beispielsweise durch Versuche derart ermittelt werden, daß bei Erreichen dieses Wertes noch für die Stabilisierung des Fahrzeugzuges (1, 2) ausreichende Seitenführungskräfte an den Rädern des Anhängefahrzeugs gegenüber der Fahrbahn aufgebracht werden können.

Zu dem Zeitpunkt (t3) sei angenommen, daß der Bremsschlupf die vorbestimmte Abweichung ($\Delta$V) erreicht. Das Fahrdynamik-Regelungssystem erkennt dies und führt fortan, d. h. ab dem Zeitpunkt (t3), eine Begrenzung des Bremsanforderungswerts (BAW) auf einen zu bestimmenden Maximalwert (BAWMAX) durch. Dieser Maximalwert (BAWMAX) wird vorzugsweise derart bestimmt, daß ausgehend von dem Zeitpunkt (t3) der um die typische anlagenbedingte Verzögerungszeit ($\Delta$T) der Anhängerbremsanlage in der Vergangenheit liegende Bremsanforderungswert verwendet wird, z. B. durch Auslesen aus einem Speicher für aufgetretene Bremsanforderungswerte. Wie aus der Fig. 2b ersichtlich ist, liegt der Maximalwert (BAWMAX) um den Betrag ($\Delta$BAW) niedriger als der zum Zeitpunkt (t3) vorliegende Bremsanforderungswert (BAW). Des weiteren ist in der Fig. 2b mit einer gestrichelten Linie (A) der theoretische weitere Verlauf des Bremsanforderungswertes (BAW) dargestellt, sofern die erwähnte Begrenzung nicht durchgeführt werden würde.

Aus der Fig. 2c ist ersichtlich, daß die Begrenzung des Bremsanforderungswerts (BAW) nach Ablauf der anlagenbedingten Verzögerungszeit ($\Delta$T) zu einem Zeitpunkt (t4) zu einer Verringerung der Bremskraft (FANH) des Anhängerfahrzeugs auf einen Wert führt, der zu dem Maximalwert (BAWMAX) korrespondiert. Diese Bremskraftbegrenzung bewirkt, wie in Fig. 2a erkennbar ist, nach dem Zeitpunkt (t4) eine Annäherung von Raddrehgeschwindigkeit (VD) und Bewegungsgeschwindigkeit (VB) aneinander und somit eine Verringerung des Bremsschlupfs.

Zu dem Zeitpunkt (t5) unterschreitet der aufgrund der Regelungsstrategie von dem Fahrdynamik-Regelungssystem auszugebende Bremsanforderungsforderungswert (BAW) den zuvor erläuterten Maximalwert (BAWMAX). Dies führt zu einem Zeitpunkt (t5) nach Ablauf der anlagenbedingten Verzögerungszeit ($\Delta$T) zu einer weiteren Verringerung der Bremskraft (FANH) des Anhängerfahrzeugs. Hiernach befindet sich der Fahrzeugzug wieder in einer stabilen Fahrsituation.

**Patentansprüche**

1. Verfahren zur Fahrdynamikregelung für einen Fahrzeugzug, bestehend aus Zugfahrzeug (1) und Anhängefahrzeug (2), wobei in dem Zugfahrzeug (1) ein Fahrdynamik-Regelungssystem vorgesehen ist, welches aufgrund von im Zugfahrzeug (1) ermittelter Fahrdynamiksignale Bremsanforderungswerte (BAW) an das Anhängefahrzeug (2) ausgibt, wobei das Anhängefahrzeug (2) mit einem Bremssystem ausgestattet ist, bei welchem aufgrund der Bremsanforderungswerte (BAW) die Bremsen des Anhängefahrzeugs (2) betätigbar sind, und wobei das Fahrdynamik-Regelungssystem von dem Anhängefahrzeug (2) Datensignale empfängt und den Bremsanforderungswert (BAW) unter Verwendung der empfangenen Datensignale ermittelt, **dadurch gekennzeichnet, daß** als von dem Anhängefahrzeug (2) empfangene Datensignale wenigstens der Mittelwert (M) der Raddrehgeschwindigkeiten ($v_1$, $v_2$) zweier Räder (30, 33) des Anhängefahrzeugs (2) sowie deren Differenzwert (D) verfügbar sind.

2. Verfahren nach Anspruch 1, **dadurch gekennzeichnet, daß** die von dem Anhängefahrzeug (2) empfangenen Datensignale die Bestimmung der Raddrehgeschwindigkeit ($v_1$, $v_2$) wenigstens eines Rades (30, 33) des Anhängefahrzeugs (2) zulassen.

3. Verfahren nach wenigstens einem der vorhergehenden Ansprüche, **dadurch gekennzeichnet, daß** die von dem Anhängefahrzeug (2) empfangenen Datensignale gemäß der Norm ISO 11992 ausgewertet werden.

4. Verfahren nach wenigstens einem der vorhergehenden Ansprüche, **dadurch gekennzeichnet, daß** das Fahrdynamik-Regelungssystem aufgrund der von dem Anhängefahrzeug (2) empfangenen Datensignale eine Blockiertendenz von Rädern (30, 33) des Anhängefahrzeugs (2) ermittelt.

5. Verfahren nach Anspruch 4, **dadurch gekennzeichnet, daß** bei erkannter Blockiertendenz von Rädern (30, 33) des Anhängefahrzeuges (2) der Bremsanforderungswert (BAW) auf einen Maximalwert (BAWMAX) begrenzt wird.

6. Verfahren nach Anspruch 4, **dadurch gekennzeichnet, daß** eine Blockiertendenz ermittelt wird, indem eine Bewegungsgeschwindigkeit (VB) des Anhängefahrzeuges (2) und eine aufgrund der von dem Anhängefahrzeug (2) empfangenen Datensignale bestimmte Raddrehgeschwindigkeit (VD) des Anhängefahrzeuges (2) auf Erreichen einer vorbestimmten Abweichung ($\Delta V$) voneinander überwacht werden.

## Claims

1. Method of regulating the travel dynamics of a vehicle consisting of a towing vehicle (1) and trailer vehicle (2), wherein there is provided in the towing vehicle (1) a travel dynamics regulating system that, on the basis of the travel dynamics signals determined in the towing vehicle (1), delivers braking requirement values (BAW) to the trailer vehicle (2), the trailer vehicle (2) being fitted with a braking system in which the brakes of the trailer vehicle (2) are arranged to be actuated on the basis of the brake requirement values (BAW), and wherein the travel dynamics regulating system receives data signals from the trailer vehicle (2) and determines the braking requirement value (BAW) using the received data signals, **characterised in that**, as data signals received from the trailer vehicle (2), there are available at least the average value (M) of the wheel velocities ($v_1$, $v_2$) of two wheels (30, 33) of the trailer vehicle (2) and their difference value (D).

2. Method according to claim 1, **characterised in that** the data signals received from the trailer vehicle (2) allow the wheel velocity ($v_1$, $v_2$) of at least one wheel (30, 33) of the trailer vehicle (2) to be determined.

3. Method according to at least one of the preceding claims, **characterised in that** the data signals received from the trailer vehicle (2) are evaluated according to the standard ISO 11992.

4. Method according to at least one of the preceding claims, **characterised in that**, on the basis of the data signals received from the trailer vehicle (2), the travel dynamics regulating system determines the locking tendency of wheels (30, 33) of the trailer vehicle (2).

5. Method according to claim 4, **characterised in that**, when a locking tendency of wheels (30, 33) of the trailer vehicle (2) is identified, the braking requirement value (BAW) is limited to a maximum value (BAWMAX).

6. Method according to claim 4, **characterised in that** the locking tendency is determined by monitoring the travel velocity (VB) of the trailer vehicle (2) and the wheel velocity (VD) of the trailer vehicle (2), determined on the basis of the data signals received from the trailer vehicle (2), when those velocities reach a predetermined departure ($\Delta V$) from each other.

## Revendications

1. Procédé pour la régulation de la dynamique de déplacement pour un train routier, constitué par un véhicule tracteur (1) et un véhicule formant remorque (2), selon lequel dans le véhicule tracteur (1) il est prévu un système de régulation de la dynamique de déplacement, qui, sur la base de signaux de dynamique de déplacement déterminés dans le véhicule tracteur (1), délivre des valeurs de demande de freinage (BAW) au véhicule formant remorque (2), et selon lequel le véhicule formant remorque (2) est équipé d'un système de freinage, dans lequel les freins du véhicule formant remorque (2) peuvent être actionnés, sur la base des valeurs de demande de freinage (BAW), et selon lequel le système de régulation de la dynamique de déplacement reçoit des signaux de données de la part du véhicule formant remorque (2) et détermine la valeur de demande de freinage (BAW) moyennant l'utilisation des signaux de données reçus, **caractérisé en ce qu'**au moins la valeur moyenne (M) des vitesses ($v_1$, $v_2$) de rotation de roues (30,33) du véhicule formant remorque (2) ainsi que leur valeur de différence (D) sont disponibles en tant que signaux de données reçus du le véhicule formant remorque (2) .

2. Procédé selon la revendication 1, **caractérisé en ce que** les signaux de données reçus du véhicule formant remorque (2) permettent la détermination de la vitesse ($v_1$, $v_2$) de rotation d'au moins une roue (30,33) du véhicule formant remorque (2).

3. Procédé selon au moins l'une des revendications précédentes, **caractérisé en ce que** les signaux de données reçus du véhicule formant remorque (2) sont évalués conformément à la norme ISO 11992.

4. Procédé selon au moins l'une des revendications précédentes, **caractérisé en ce que** le système de régulation de la dynamique de déplacement détermine, à partir des signaux de données reçus du véhicule formant remorque, une tendance au blocage de roues (30,33) du véhicule formant remorque (2) .

5. Procédé selon la revendication 4, **caractérisé en ce que** dans le cas où une tendance au blocage de roues (30, 33) du véhicule formant remorque (2) est identifiée, la valeur de demande de freinage (BAW) est limitée à une valeur maximale (BAWMAX).

6. Procédé selon la revendication 4, **caractérisé en ce qu'**une tendance au blocage est déterminée par le fait qu'une vitesse de déplacement (VB) du véhicule formant remorque (2) et une vitesse de rotation de roue (VD) du véhicule formant remorque (2), déterminée sur la base des signaux de données reçus du véhicule formant remorque (2), sont contrôlées pour déterminer si un écart prédéterminé ($\Delta V$) de ces vitesses est atteint.

FIG. 1

EP 1 439 103 B1

Fig.2a

Fig.2b

Fig.2c

Fig.2

9